# EUROPEAN PATENT SPECIFICATION

(11) **EP 3 319 103 B1**
(45) Date of publication and mention of the grant of the patent: **14.06.2023**
(21) Application number: 17162808.4
(22) Date of filing: 24.03.2017
(51) Int. Cl.: H01H 9/22, H01H 9/26

(54) **INTEGRATED INTERLOCK DEVICE OF AIR CIRCUIT BREAKER AND METHOD OF USING THE SAME**
INTEGRIERTE VERRIEGELUNGSVORRICHTUNG EINES LEISTUNGSTRENNSCHALTERS UND VERFAHREN ZUR VERWENDUNG DAVON
DISPOSITIF D'INTERVERROUILLAGE INTÉGRÉ DE DISJONCTEUR À AIR ET SON PROCÉDÉ D'UTILISATION

(30) Priority: 02.11.2016 KR 20160145354
(43) Date of publication of application: 09.05.2018
(73) Proprietor: LSIS Co., Ltd., Gyeonggi-Do 14119 (KR)
(72) Inventor: RYU, Jaeseop, 14118 Gyeonggi-do (KR)
(74) Representative: K&L Gates LLP

(56) References cited:
- EP-A2- 1 150 316
- DE-B3-102008 007 987
- KR-A- 20030 075 039
- US-B1- 6 225 581

## Description

### BACKGROUND OF THE INVENTION

### 1. Field of the Invention

This specification relates to a system comprising air circuit breaker and an integrated interlock device and a method of using the system.

### 2. Background of the Invention

Generally, an air circuit breaker is a kind of circuit breaker configured to open and closes a load at a power transmission site or a substation, or on an electric circuit, etc., or configured to cut off a current when an accident such as a ground connection (earthing) or a short-circuit occurs, and is mainly used for a low voltage device.

Such an air circuit breaker may be used in a state where two or more air circuit breakers are connected to each other for interaction. In this case, it is required to control an interaction of the plurality of air circuit breakers. For example, if a first circuit breaker is turned on, a second circuit breaker is turned off. Such an interaction may be extended to three or more air circuit breakers. As such an interaction, a method of controlling on-off operations of two or more circuit breakers by using cables has been widely used.

A door lock function may be provided to prevent a switchboard door from being open while a circuit breaker is being operated. Such a door lock function may be also performed by utilizing cables, if a switchgear door and a circuit breaker are far from each other.

However, in case of such an interlock device using cables, either a mechanical interlock or a switchboard door interlock should be selectively used.

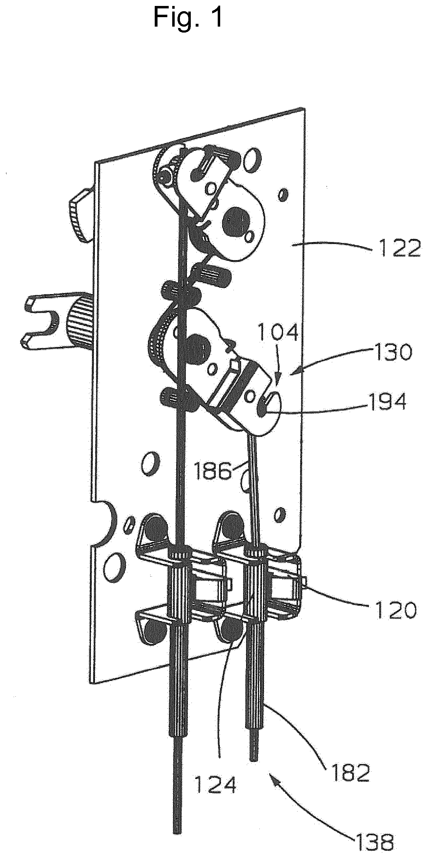

For example, US 6,225,581 'Installation comprising an Electrical Switchgear Apparatus and a Cable Interlock' may be referred to. A prior art thereof is shown in FIG. 1. The prior art relates to an apparatus in which a switching mechanism of one or more circuit breakers is interlocked with a mechanical interlock or a door by a power transmission cable.

This prior art includes a circuit breaker (not shown), a cable 138 and an interlock means 130. Here, the cable 138 is composed of a sheath 182 formed of a flexible material, and a core 186 slidable in the sheath 182. One end of the sheath is fixed to a frame 122 by a fixing means 120, and one end of the core 186 is fixed to the interlock means 130. The interlock means 130 includes an end part 194 that operates by interworking with a cable, and a housing 104 that accommodates the end part therein.

The interlock means 130, the fixing means 120 and the cable 138 are installed at a cradle (not shown) of one circuit breaker (first circuit breaker) in a connected state to each other, and installed at a cradle (not shown) of another circuit breaker (second circuit breaker) with a symmetric structure for interaction. That is, if the cable 138 is pulled as the first circuit breaker is turned on, the second circuit breaker is turned off by the pulled cable.

Such an interlock device connected to two circuit breakers is usually installed in a pair. Assuming that the above device is 'A', the same or similar device 'B' is installed close to the 'A'. Here, the 'B' may be installed to perform an operation in an opposite direction to the 'A'. According to the 'B', when the second circuit breaker is turned on, the 'on' operation is transmitted to the first circuit breaker by a cable so that the first circuit breaker is turned off.

However, the conventional interlock device is configured to perform only one function of a mechanical interlock at two circuit breakers connected to each other. Even though such a function may be used by being converted into a door lock function, only one function may be performed.

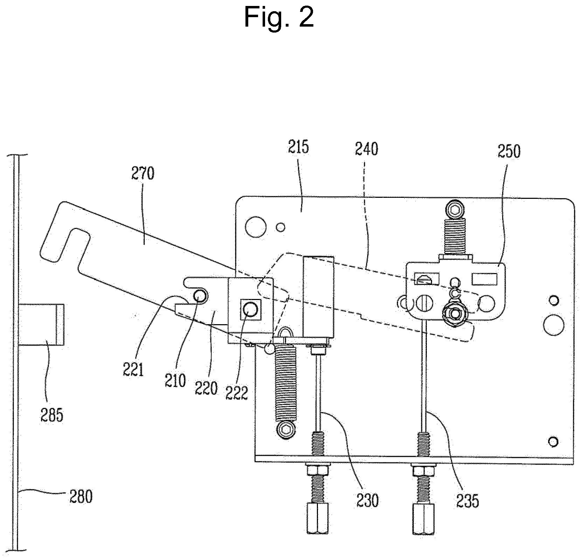

In order to overcome such limitations, has been proposed an invention capable of using different interlock functions in an integrated manner. For example, Korean Patent Laid-Open No. 10-2016-0037619 'Interlock device for air circuit breaker' may be referred to. A prior art thereof is shown in FIG. 2. The prior art relates to an interlock device of an air circuit breaker capable of simultaneously performing a mechanical interlock function and a door interlock function.

The prior art includes a rotation pin 210 connected to a main shaft of an air circuit breaker and rotated according to a closing or interrupting operation of the circuit breaker; a first lever 220 having one end where a locking groove 221 for inserting the rotation pin 210 is formed such that the first lever 220 performs a rotary motion by the rotation pin 210, and having another end to which a first wire 230 is connected; a slider 250 installed to be spaced apart from the first lever 220, and connected to a second wire 235 to receive a force when another air circuit breaker performs a closing operation; and a lock member 270 coupled to a rotation shaft 222 of the first lever 220, and locked to a hooking member 285 provided at a switchboard panel door 280.

In the prior art, when the main shaft of a first circuit breaker is operated on an 'on' position, the rotation pin 210 is rotated about the main shaft and the first lever 220 is rotated by interaction. As a result, the lock member 270 installed at the rotation shaft 222 is rotated to restrict the switchboard panel door 280. On the other hand, when a second circuit breaker is operated on an 'on' position, the 'on' operation is transmitted through the second wire 235 to pull the slider 250 and to cause the first circuit breaker to be turned off by an operation lever 240 connected to the slider 250. Such a configuration is similar to the aforementioned prior art.

In summary, in the prior art, a mechanical interlock is carried out by using a cable, and a door lock function is carried out by a lock member separately installed at a rotating lever.

However, in the prior art, since a mounting plate 215, the switchgear panel door 280 and the lock member 270 should be connected to each other, there is a spatial limitation and the degree of freedom of design is reduced. In addition, an additional configuration different from a configuration using a cable should be implemented, an entire configuration becomes complicated.

Thus, it is necessary to use a plurality of interlock functions used at a circuit breaker such as a mechanical interlock function or a switchboard door interlock function, in an integrated manner.

### SUMMARY OF THE INVENTION

Therefore, an aspect of the detailed description is to provide an integrated interlock device of an air circuit breaker capable of performing an interlock function through a power transmission using cables, in two or more circuit breakers connected to each other for interaction, and capable of using a plurality of interlock functions in an integrated manner, and a method of using the same.

To achieve these and other advantages and in accordance with the purpose of this specification, as embodied and broadly described herein, there is provided an integrated interlock device of an air circuit breaker, including: a mounting plate installed at part of a cradle or a switchboard; a bi-directional lever rotatably installed at the mounting plate, having a first arm and a second arm which are toward different directions on the basis of a first rotation shaft, and moved in a connected state to a main shaft of a circuit breaker body; a uni-directional lever rotatably installed at the mounting plate in a spaced state from the bi-directional lever, having a third arm which is toward one direction on the basis of a second rotation shaft, and moved in a connected state to an off lever of the circuit breaker body; first to third cables including sheaths and core members, and configured to transmit a power in a connected state to the first to third arms, respectively; and first to third connection openings spaced from the first to third arms, and configured to fix the sheaths of the first to third cables, respectively.

Each of the first to third arms may be provided with a pair of core holders for fixing a pair of core members of each of the first to third cables.

The first and second connection openings may be spaced from each other in opposite directions, on the basis of the bi-directional lever.

Each of the first to third connection openings may be provided with a pair of cable holes for fixing a pair of sheaths of each of the first to third cables.

Core holes for inserting the core members may be penetratingly-formed at the core holders, and core fixing holes may be formed at one side of the core holes in a direction perpendicular to the core holes.

Sheath fixing holes may be penetratingly-formed at one side of the cable holes, in a direction perpendicular to the cable holes.

Coupling means may be provided to fix the core members or the sheaths by being inserted into the core fixing holes or the sheath fixing holes.

The coupling means may include a bolt and a nut.

A locking lever, rotated in a connected state to a shaft lever of the circuit breaker body, may be provided on a rear surface of the bi-directional lever. And a transmission lever, rotated in a connected state to the off lever of the circuit breaker body, may be provided on a rear surface of the uni-directional lever.

First and second insertion holes, configured to insert the locking lever and the transmission lever, respectively, may be formed at a side plate of the cradle. A plurality of assembly holes for insertion-installation of the mounting plate may be formed at the side plate, and mounting pins inserted into the assembly holes may be provided on a rear surface of the mounting plate.

The mounting plate may be provided with operation holes for operating core holders by inserting part of the core holders.

To achieve these and other advantages and in accordance with the purpose of this specification, as embodied and broadly described herein, there is also provided a method of using an integrated interlock device of an air circuit breaker, including: connecting a first arm of a first circuit breaker with a third arm of a second circuit breaker by a first cable, connecting a second arm of the first circuit breaker with a door lever of the first circuit breaker by a second cable, connecting a third arm of the first circuit breaker with a first arm of the second circuit breaker by a third cable, connecting the second arm of the first circuit breaker with a switch lever of an MOC switch of the first circuit breaker by a fourth cable, connecting the third arm of the first circuit breaker with an opening lever of the first circuit breaker by a fifth cable, connecting a second arm of the second circuit breaker with a door lever of the second circuit breaker by a sixth cable, connecting the second arm of the second circuit breaker with a switch lever of an MOC switch of the second circuit breaker by a seventh cable, and connecting the third arm of the second circuit breaker with an opening lever of the second circuit breaker by an eighth cable; and turning on the second circuit breaker to rotate a bi-directional lever of the second circuit breaker, pulling the third cable by downward-moving the first arm of the second circuit breaker, and turning off the first circuit breaker by downward-moving the third arm of the first circuit breaker.

The method may further include pulling the sixth cable by upward-moving the second arm of the second circuit breaker, and preventing a switchboard door of the second circuit breaker from being open by rotating the door lever of the second circuit breaker and locking the door lever of the second circuit breaker to a restriction plate of the second circuit breaker.

The method may further include pulling the seventh cable by upward-moving the second arm of the second circuit breaker, and turning on the MOC switch of the second circuit breaker.

The method may further include rotating the opening lever of the first circuit breaker by opening a switchboard door of the first circuit breaker, pulling the fifth cable by the opening lever of the first circuit breaker, and turning off the first circuit breaker by downward-moving the third arm of the first circuit breaker.

In the integrated interlock device of an air circuit breaker and the method of using the same according to an embodiment of the present invention, various interlock functions may be utilized in a plurality of circuit breakers connected to each other.

In addition, since the interlock functions are used by using cables, they may be applied to two or more remotely-installed circuit breakers irrespective of an installation place or a position of components.

Independent claims 1 and 11 define the different aspects of the invention. Dependent claims 2 to 10 and 12 to 14 state different embodiments of the invention.

Further scope of applicability of the present application will become more apparent from the detailed description given hereinafter. However, it should be understood that the detailed description and specific examples, while indicating preferred embodiments of the invention, are given by way of illustration only, since various changes and modifications will become apparent to those skilled in the art from the detailed description.

### BRIEF DESCRIPTION OF THE DRAWINGS

The accompanying drawings, which are included to provide a further understanding of the invention and are incorporated in and constitute a part of this specification, illustrate exemplary embodiments and together with the description serve to explain the principles of the invention.

In the drawings:
FIG. 1 is a perspective view of an interlock device according to the conventional art;
FIG. 2 is a planar view of an interlock device according to another conventional art;
FIG. 3 is a configuration view illustrating that an integrated interlock device of an air circuit breaker is applied to two circuit breakers, according to an embodiment of the present invention;
FIG. 4 is a perspective view of an integrated interlock device of an air circuit breaker according to an embodiment of the present invention;
FIG. 5 is a perspective view illustrating a state that an integrated interlock device of an air circuit breaker has been mounted to a cradle, according to an embodiment of the present invention;
FIG. 6 is a disassembled perspective view of the integrated interlock device of an air circuit breaker and a side plate of the cradle of FIG. 5;
FIG. 7 is a perspective view of a circuit breaker body to which an integrated interlock device of an air circuit breaker according to an embodiment of the present invention is applied; and
FIG. 8 is a block diagram illustrating a method of using an integrated interlock device of an air circuit breaker according to an embodiment of the present invention.

### DETAILED DESCRIPTION OF THE INVENTION

Description will now be given in detail of preferred configurations of the present invention, with reference to the accompanying drawings.

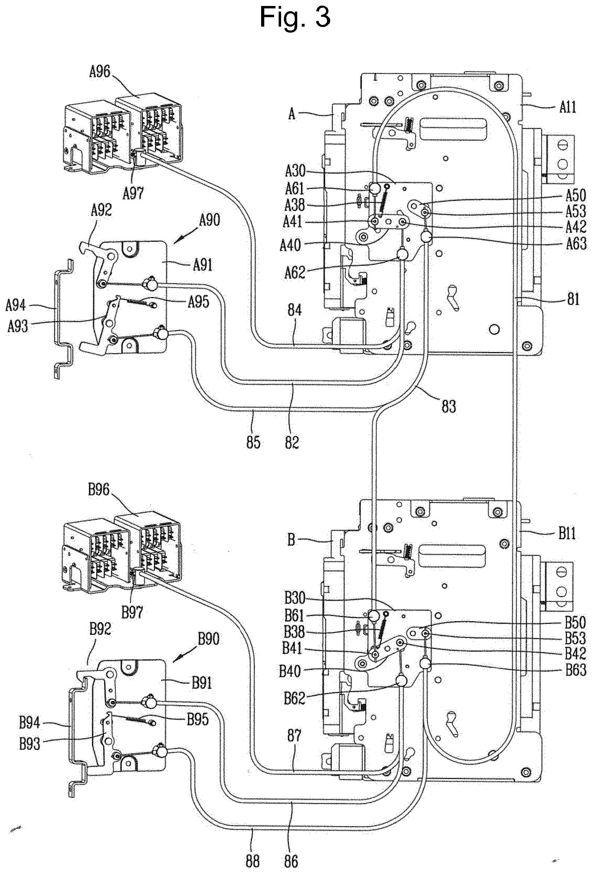

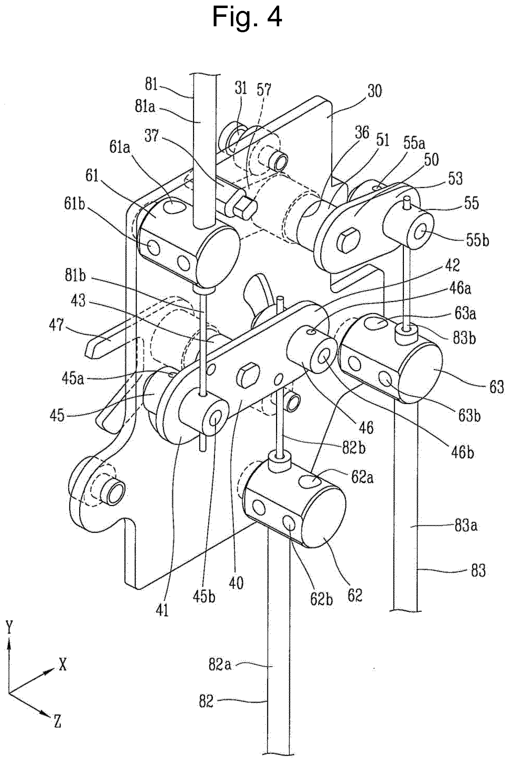

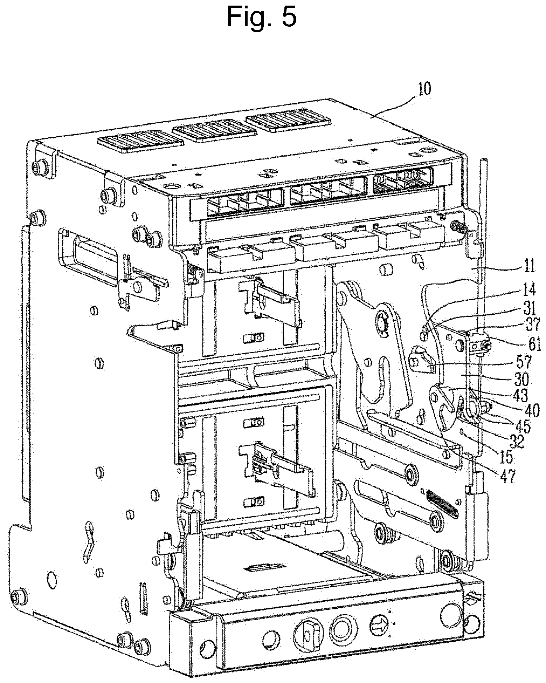

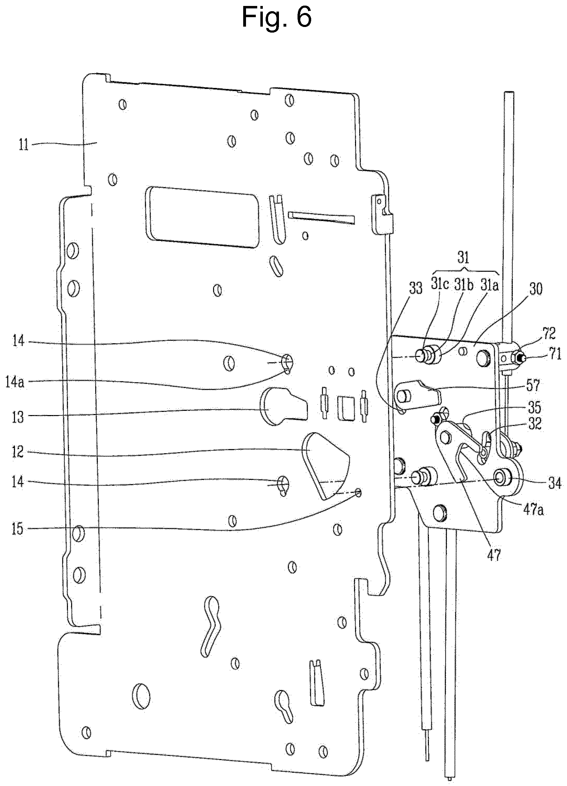

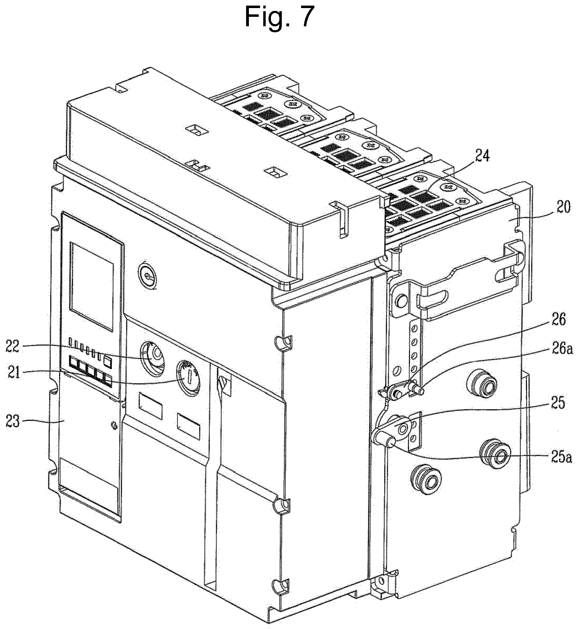

FIG. 3 is a configuration view illustrating that an integrated interlock device of an air circuit breaker is applied to two circuit breakers, according to an embodiment of the present invention. FIG. 4 is a perspective view of an integrated interlock device of an air circuit breaker according to an embodiment of the present invention. FIG. 5 is a perspective view illustrating a state that an integrated interlock device of an air circuit breaker has been mounted to a cradle, according to an embodiment of the present invention. FIG. 6 is a disassembled perspective view of the integrated interlock device of an air circuit breaker and a side plate of the cradle of FIG. 5. And FIG. 7 is a perspective view of a circuit breaker body to which an integrated interlock device of an air circuit breaker according to an embodiment of the present invention is applied.

Hereinafter, an integrated interlock device of an air circuit breaker according to an embodiment of the present invention will be explained with reference to the attached drawings.

The integrated interlock device of an air circuit breaker according to an embodiment of the present invention includes: a mounting plate 30 installed at part of a cradle 10 or a switchboard (not shown); a bi-directional lever 40 rotatably installed at the mounting plate 30, having a first arm 41 and a second arm 42 which are toward different directions on the basis of a first rotation shaft 43, and moved in a connected state to a main shaft of a circuit breaker body 20; a uni-directional lever 50 rotatably installed at the mounting plate 30 in a spaced state from the bi-directional lever 40, having a third arm 53 which is toward one direction on the basis of a second rotation shaft 51, and moved in a connected state to an off lever of the circuit breaker body 20; first to third cables 81, 82, 83 including sheaths 81a,82a,83a and core members 81b,82b,83b, and configured to transmit a power in a connected state to the first to third arms 41,42,53, respectively; and first to third connection openings 61,62,63 spaced from the first to third arms 41,42,53, and configured to fix the sheaths 81a,82a,83a of the first to third cables 81,82,83, respectively.

FIG. 7 illustrates a perspective view of the circuit breaker body 20. A switching mechanism, an extinguishing unit, etc. may be provided in the circuit breaker body 20. On and off buttons 21,22 for closing and interrupting operations, and an overcurrent relay 23 configured to transmit a trip signal after detecting an abnormal current may be provided on a front surface of the circuit breaker body 20. Arc chutes 24 which constitute the extinguishing unit are partially exposed to a region above the circuit breaker body 20.

A shaft lever 25 which is rotated by being interworked with a main shaft of the switching mechanism, and an off lever 26 configured to generate an interrupting operation at the switching mechanism by an interlock function are provided on a side surface of the circuit breaker body 20.

Referring to FIGS. 5 and 6, FIG. 5 illustrates part of a side plate 11 of a cradle 10 in a cut-out state. The cradle 10 is provided to accommodate the circuit breaker body 20 therein. The cradle 10 may be formed in a box shape having an open front surface. The integrated interlock device of an air circuit breaker according to an embodiment of the present invention may be installed at the side plate 11 of the cradle 10. For this, assembly holes 14 and first and second insertion holes 12, 13 may be formed. The assembly holes 14 are for assembly of the mounting plate 30. The mounting plate 30 may be simply coupled to the side plate 11 by inserting mounting pins 31 of the mounting plate 30 into the assembly holes 14. Fixing grooves 14a are concavely formed below the assembly holes 14, thereby fixing and supporting the mounting pins 31.

A locking lever 47 and a transmission lever 57 provided on a rear surface of the mounting plate 30 are inserted into a first insertion hole 12 and a second insertion hole 13, respectively, thereby being connected to the shaft lever 25 and the off lever 26 provided at one side of the circuit breaker body 20.

A coupling screw hole 15 may be provided at part of the side plate 11, thereby fixedly-coupling the mounting plate 30 thereto by a screw coupling.

The integrated interlock device of an air circuit breaker according to an embodiment of the present invention will be explained with further reference to FIG. 6.

The mounting plate 30 may be formed as a flat member. The mounting plate 30 may be installed at part of the cradle 10 or a distributing box. The mounting plate 30 may be installed at the side plate 11 of the cradle 10. For installation of the mounting plate 30, the plurality of mounting pins 31 may be provided on a rear surface of the mounting plate 30. The mounting pins 31 may be formed in a pillar shape having a three-end structure including a circumferential groove portion and a circumferential protrusion portion. The mounting pin 31 may include a supporting portion 31a formed at a lower end thereof, a fixing portion 31b formed at an intermediate part thereof, and an inserting portion 31c formed at an upper end thereof. Here, a diameter size of the supporting portion 31a is the largest, and a diameter size of the fixing portion 31b is the smallest (supporting portion 31a > inserting portion 31c > fixing portion 31b). Accordingly, the inserting portion 31c is inserted into the assembly hole 14, and then the fixing portion 31b is fitted into the fixing groove 14a. It is preferable that a diameter of the assembly hole 14 is larger than that of the inserting portion 31c, but is smaller than that of the supporting portion 31a. With such a configuration, the mounting pin 31 may be easily fitted into the assembly hole 14, and the mounting pin 31 is stably fixed without moving in a front or rear direction when the fixing portion 31b is fitted into the fixing groove 14a. The mounting pin 31 may be pulled out only in an upper direction. The supporting portion 31a stably supports the mounting pin 31 outside the side plate 11, and forms a predetermined gap between the side plate 11 and the mounting plate 30. Accordingly, a predetermined space is formed on a rear surface of the mounting plate 30, for prevention of interference among various components.

The cables 81,82,83 may include sheaths 81a,82a,83a and core members 81b,82b,83b. The sheaths 81a,82a,83a may be formed of a material having a high flexibility and an insulation property, and the core members 81b,82b,83b may be formed of a material having a flexibility and a high strength (e.g., steel wire, etc.). The cables 81,82,83 are used for power transmission between a plurality of circuit breakers, or between a circuit breaker and other device (or component). The core members 81b,82b,83b may perform a sliding motion within the sheaths 81a,82a,83a. Each of the core members 81b,82b,83b is formed to have a longer length than each of the sheaths 81a,82a,83a, and is exposed to two ends of each of the sheaths 81a,82a,83a. By using a cable, a power may be transmitted to a circuit breaker or a device which is disposed at a remote distance.

A supporting ring portion 34 is provided at part of the mounting plate 30. The mounting plate 30 may be fixedly-coupled to the side plate 11 by a coupling means such as a screw coupled to the supporting ring portion 34 and the coupling screw hole 15. That is, the mounting plate 30 for mounting the mounting pins 31 inserted into the assembly holes 14 may be simply installed, and may be fixed by using a coupling means coupled to the supporting ring portion 34 and the coupling screw hole 15.

The mounting plate 30 is provided with first and second operation holes 32, 33 for operating core holders 45, 46, 55 by inserting part of the core holders 45, 46, 55. The first and second operation holes 32, 33 may be formed to have a circular arc shape. The first operation hole 32 may be provided in one pair symmetrical with each other on the basis of the first rotation shaft 43.

A first shaft hole 35 for inserting the first rotation shaft 43, and a second shaft hole 36 for inserting the second rotation shaft 51 are formed at the mounting plate 30.

A spring fixing portion 37 for installing a return spring 38 (refer to A38 of FIG. 3) in order to provide a restoration force to the bi-directional lever 40, may be provided at part of the mounting plate 30.

The bi-directional lever 40 and the uni-directional lever 50 are rotatably installed at the mounting plate 30. The bi-directional lever 40 and the uni-directional lever 50 are spaced from each other by a predetermined distance, for prevention of interference therebetween at the time of rotation.

The bi-directional lever 40 may be fixedly-installed at the first rotation shaft 43. The bi-directional lever 40 may be formed as a straight plate. The bi-directional lever 40 is formed to be perpendicular to the first rotation shaft 43. It is also possible that the bi-directional lever 40 is integrally formed with the first rotation shaft 43.

The bi-directional lever 40 includes a first arm 41 and a second arm 42 which are extended in opposite directions. The first and second arms 41, 42 may be integrally formed with the bi-directional lever 40. With such a configuration, when the bi-directional lever 40 is clockwise rotated, the first arm 41 is upward moved and the second arm 42 is downward moved.

Core holders 45, 46 for fixing the core members of the cables, respectively are provided at the first and second arms 41, 42. Here, the core holders 45, 46 are referred to as a first core holder 45 and a second core holder 46. Each of the core holders 45, 46 may be formed to have a cylindrical shape. Each of the core holders 45, 46 may be provided in one pair, and may be installed on two side surfaces of each of the first and second arms 41, 42. That is, the first core holder 45 may be provided on both side surfaces of the first arm 41. The same applies to the second arm 42. According to another embodiment, each of the core holders 45, 46 may be formed as a single integrated opening, not a pair of openings. In this case, the core holders 45, 46 are penetratingly-installed at the arms 41, 42 of the bi-directional lever 40.

Core holes 45a, 46a for inserting the core members 81b, 82b of the cables 81, 82 are penetratingly-formed at the core holders 45,46. The core holes 45a,46a are preferably formed to be perpendicular to a lengthwise direction of the bidirectional lever 40. That is, the core holes 45a,46a are formed in upper and lower directions (y-axis direction) in the drawings. If each of the core holders 45, 46 is formed as a single opening not a pair of openings, two core holes 45a, 46a are formed.

Core fixing holes 45b, 46b are formed in a direction perpendicular to the core holes 45a, 46a, at one side of the core holes 45a,46a, i.e., in a direction perpendicular to the mounting plate 30 (z-axis direction). The core fixing holes 45b, 46b are provided to couple thereto a coupling means for fixing the core members 81b, 82b.

The locking lever 47 is coupled to a rear end of the first rotation shaft 43. The locking lever 47 is operated in a connected state to the shaft lever 25. The locking lever 47 is provided with a locking groove 47a for locking a protrusion 25a of the shaft lever 25. When the locking lever 47 is rotated, the bi-directional lever 40 coupled to a front end of the first rotation shaft 43 is rotated together. Since the locking lever 47 is rotated according to an 'on' operation and an 'off' operation of the circuit breaker body 20, an operation associated with the 'on' operation or the 'off' operation may be transmitted.

The uni-directional lever 50 is rotatably installed at the mounting plate 30 at a position spaced from the bi-directional lever 40 by a predetermined distance. The uni-directional lever 50 is installed at a front end of the second rotation shaft 51. The second rotation shaft 51 is inserted into the second shaft hole 36.

The uni-directional lever 50 is provided with a third arm 53 which is toward one direction. The third arm 53 may be provided at one side of the uni-directional lever 50. The third arm 53 may be integrally formed with the uni-directional lever 50.

A transmission lever 57 is coupled to a rear end of the second rotation shaft 51. The transmission lever 57 may be installed in a direction opposite to the uni-directional lever 50. That is, if the third arm 53 of the uni-directional lever 50 protrudes toward an (+) x axis direction, the transmission lever 57 may be towards a (-) x direction. The transmission lever 57 is operated in a connected state to the off lever 26 of the circuit breaker body 20. That is, when the uni-directional lever 50 is rotated, the transmission lever 57 is rotated through the second rotation shaft 51, and the transmission lever 57 may interrupt the circuit breaker body 20 by operating the protrusion 26a of the off lever 26.

The third arm 53 of the uni-directional lever 50 is provided with a pair of third core holders 55, and the third core holders 55 are provided with a core hole 55a and a core fixing hole 55b. The third core holders 55, the core hole 55a and the core fixing hole 55b are the same as or similar to the core holders 45, 46 of the bi-directional lever 40, and thus detailed explanations thereof will be omitted.

Connectors 61, 62, 63 are provided at positions spaced from the core holders 45, 46, 55 of the bi-directional lever 40 and the uni-directional lever 50 by predetermined distances, respectively. The connectors 61, 62, 63 are provided to fix the sheaths 81a, 82a, 83a of the cables 81, 82, 83. The connectors 61, 62, 63 may fix end parts of the sheaths 81a, 82a, 83a.

A first connector 61 is provided at one side of the first core holder 45, and a third connector 63 is provided at one side of the third core holder 55. Here, the first connector 61 and the second connector 62 may be located in opposite directions. In other words, in the drawings, the first connector 61 may be positioned above the first core holder 45 in an y-axis, and the second connector 62 may be positioned below the second core holder 46 in an y-axis. Accordingly, the first cable 81 and the second cable 82 may be operated in opposite directions.

The connectors 61, 62, 63 will now be described in more detail. For example, the first connector 61 will be described. A cable hole 61a for inserting a cable thereinto is formed at the first connector 61. The cable hole 61a is preferably formed in an up-down direction (y-axis direction) like the core hole 45a. The cable holes 61a are formed as a pair. Here, it is preferable that the pair of cable holes 61a are formed at a position linearly connected to the core hole 45a. An end part of the sheath 81a is inserted into the first connector 61.

A sheath fixing hole 61b is formed at one side of the cable hole 61a in a direction perpendicular to the cable hole 61a (x-axis direction). The sheath fixing hole 61b is provided to couple thereto a coupling means for fixing the sheath 81a.

The above description of the first connector 61 is equally applied to the second connector 62 and the third connecting port 63.

The sheaths 81a, 82a, 83a of the cables 81, 82, 83 are fixed by the connectors 61, 62, 63, and the core members 81b, 82b, 83b coupled to the core holders 45, 46, 55 are moved as the bidirectional lever 40 or the uni-directional lever 50 moves.

Provided are coupling means inserted into the core fixing holes 45b, 46b, 55b to fix the core members 81b, 82b, 83b, and coupling means inserted into the sheath fixing holes 61b, 62b, 63b to fix the sheaths 81a, 82a, 83a. The coupling means may include a bolt 71 and a nut 72 (refer to FIG. 6).

Each of the arms 41,42,53 is provided with a pair of core holes 45a,46a,55a, respectively, and each of the connectors 61,62,63 is provided with a pair of cable holes 61a,62a,63a, respectively. Thus, a pair of cables may be installed at each of the arms 41,42,53 to thus be utilized for an interlock function.

A door interlock device will be explained with reference to FIG. 3. A door interlock device (A90) of a first circuit breaker (A) includes a door lever (A92) rotatably installed at a door interlock plate (A91) and configured to restrict a switchgear door from being open; and an opening lever (A93) that operates in an interworking manner when the switchboard door is open. One end of the door lever (A92) may be rotated in a connected state to a cable, and the other end thereof may be provided with a hook so as to be locked by a restriction plate (A94) coupled to the switchgear door to prevent opening of the switchgear door.

When the switchboard door is closed, one end of the opening lever (A93) is in contact with the restriction plate (A94), and another end of the opening lever (A93) is connected to an operation spring (A95). However, when the switchboard door is open, the opening lever (A93) is rotated to pull a cable 85 connected to one end of the opening lever (A93).

An operation of the integrated interlock device of an air circuit breaker according to an embodiment of the present invention will be described. This is also a method of using the integrated interlock device of an air circuit breaker according to an embodiment of the present invention.

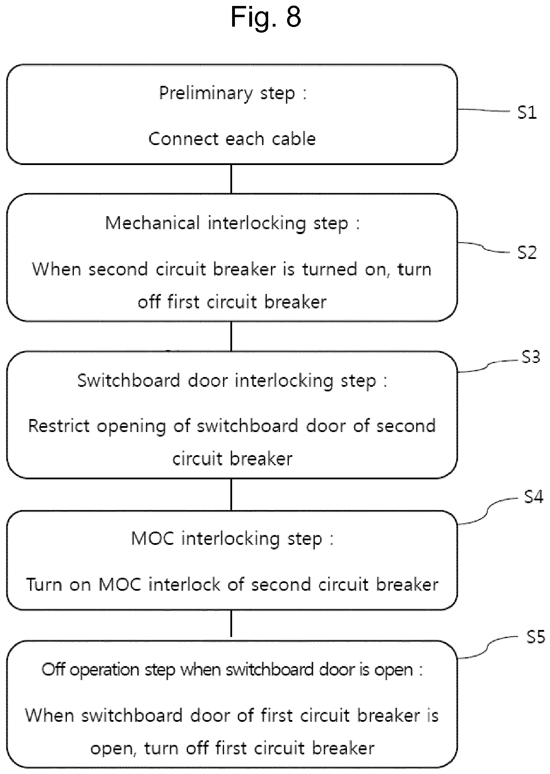

Referring to FIG. 8, the method of using the integrated interlock device of an air circuit breaker according to an embodiment of the present embodiment includes a preliminary step (S1), a mechanical interlocking step (S2), a switchboard door interlocking step (S3), an MOC interlocking step (S4), and an 'off' operation step (S5) when a switchgear door is open.

Here, the preliminary step (S1) may be a step of connecting each cable. The mechanical interlocking step (S2) may be a step of turning off another circuit breaker when one circuit breaker is turned on. The switchboard door interlocking step (S3) may be a step of preventing an open state of a switchboard door of the turned-on circuit breaker. The MOC interlocking step (S4) may be a step of turning on an MOC interlock of the turned-on circuit breaker. And the 'off' operation step (S5) when a switchgear door is open may be a step of turning off said another circuit breaker when a switchboard door of said another circuit breaker is open.

Each step will be described in detail. For example, referring to FIG. 3, a case where two circuit breakers are provided will be described. Here, a first circuit breaker (A) and a second circuit breaker (B) are provided. In order to distinguish components of the circuit breakers, 'A' is added to a front side of reference numerals of components of the first circuit breaker (A), and 'B' is added to a front side of reference numerals of components of the second circuit breaker (B). For example, the first arm of the first circuit breaker (A) is represented as 'A41' and the first arm of the second circuit breaker (B) is represented as 'B41'.

The preliminary step (S1) is a step of connecting each cable. A first cable 81 connects the first arm (A41) of the first circuit breaker (A) with the third arm (B53) of the second circuit breaker (B). A second cable 82 connects the second arm (A42) of the first circuit breaker (A) with the door lever (A92) of the first circuit breaker (A). A third cable 83 connects the third arm (A53) of the first circuit breaker (A) with the first arm (B41) of the second circuit breaker (B). A fourth cable 84 connects the second arm (A42) of the first circuit breaker (A) with a switch lever (A97) of an MOC switch (A96) of the first circuit breaker (A). A fifth cable 85 connects the third arm (A53) of the first circuit breaker (A) with the opening lever (A93) of the first circuit breaker (A). A sixth cable 86 connects the second arm (B42) of the second circuit breaker (B) with a door lever (B92) of the second circuit breaker (B). A seventh cable 87 connects the second arm (B42) of the second circuit breaker (B) with a switch lever (B97) of an MOC switch (B96) of the second circuit breaker (B). An eighth cable 88 connects the third arm (B53) of the second circuit breaker (B) with an opening lever (B93) of the second circuit breaker (B).

In such an installed state, a mechanical interlock function will be described. The mechanical interlocking step (S2) is a step of turning off another circuit breaker when one circuit breakers is turned on. A case where the second circuit breaker (B) is turned on will be described as an example. When the second circuit breaker (B) is turned on, a rotational force of the main shaft is transmitted via the shaft lever and the locking lever of the second circuit breaker (B), thereby rotating the bi-directional lever (B40) in a counterclockwise direction as shown in FIG. 3. Accordingly, the first arm (B41) of the second circuit breaker (B) is downward moved to pull one end of the third cable 83. Accordingly, the third arm (A53) of the first circuit breaker (A) connected to another end of the third cable 83 is downward moved to operate the off lever, such that the first circuit breaker (A) is turned off.

On the contrary, when the first circuit breaker (A) is turned on, the second circuit breaker (B) is turned off via the first arm (A41) of the first circuit breaker (A), the first cable 81, and the third arm (B53) of the second circuit breaker (B).

Next, a switchboard door interlock function will be explained. The switchboard door interlocking step (S3) is a step of preventing a switchboard door of the turned-on circuit breaker from being open. First, a case where a switchboard door interlock function is performed when the circuit breaker is turned on, will be described. When the second circuit breaker (B) is turned on, the second arm (B42) is upward moved. As a result, the sixth cable 86 is pulled, and the door lever (B92) of the second circuit breaker (B) is rotated in a counterclockwise direction, such that a hook is caught by the restriction plate (B94). Thus, opening of the switchboard door of the second circuit breaker (B) is prevented.

On the other hand, a case where the circuit breaker is turned off when a switchgear door is open will be described. This corresponds to the 'off' operation step (S5) when a switchgear door is open. That is, when a switchboard door of another circuit breaker is open, said another circuit breaker is turned off. When the switchboard door of the first circuit breaker (A) is open and the restriction plate (A94) is separated from the opening lever (A93), the opening lever (A93) is rotated in a clockwise direction by receiving a force of the operation spring (A95). Accordingly, the fifth cable 85 connected to one end of the opening lever (A93) is pulled, the third arm (A53) is downward moved, and the first circuit breaker (A) is turned off.

Next, an MOC interlock function will be explained. The MOC interlocking step (S4) may be a step of turning on an MOC interlock of the turned-on circuit breaker. As the second circuit breaker (B) is turned on, the second arm (B42) is upward moved, and the seventh cable 87 connected to the second arm (B42) is pulled such that the switch lever (B97) of the MOC switch 96 of the second circuit breaker (B) is pulled. As a result, the MOC switch (B96) is turned on.

On the other hand, as the first circuit breaker (A) is turned off, the second arm (A42) returns to its original position (horizontal state) by the return spring (A38). And the fourth cable 84 connected to the second arm (A42) is pushed to return the switch lever (A97) of the first circuit breaker (A). As a result, the MOC switch (A96) is turned off.

Although not shown, it is also possible to use three breakers connected to each other.

For a maximum utilization of an embodiment of the present invention, six cables may be connected to each circuit breaker, and various interlock functions may performed according to 'on' and 'off' operations.

In the integrated interlock device of an air circuit breaker according to an embodiment of the present invention, various interlock functions may be utilized in a plurality of circuit breakers connected to each other.

In addition, since the interlock functions are used by using cables, they may be applied to two or more remotely-installed circuit breakers irrespective of an installation place or a position of components.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications are therefore intended to be embraced by the appended claims.

## Claims

1. A system comprising an air circuit breaker and an integrated interlock device installed at a cradle (10) or a switchboard of the air circuit breaker to control an interaction with one or more other air circuit breakers, the air circuit breaker and the integrated interlock device comprising:
a mounting plate (30) installed at part of the cradle (10) or the switchboard;
a lever assembly rotatably installed at the mounting plate (30); and
cables coupled to the lever assembly, each cable (81, 82, 83) including a sheath (81a, 82a, 83a) and a core member (81b, 82b, 83b),
wherein the lever assembly includes:
a bi-directional lever (40) rotatably installed at the mounting plate (30), having a first arm (41) and a second arm (42) which are toward different directions and provided on a first rotation shaft (43), and moved in a connected state to a shaft lever (25) of a circuit breaker body (20); and
wherein the lever assembly further includes:
a uni-directional lever (50) rotatably installed at the mounting plate (30) in a spaced state from the bi-directional lever (40), having a third arm (53) which is toward one direction on the basis of a second rotation shaft (51), and moved in a connected state to an off lever (26) of the circuit breaker body (20), wherein the off lever (26) is configured to generate an interrupting operation to turn off the air circuit breaker, and
wherein the cables include up to pairs of first to third cables (81, 82, 83) configured to transmit a mechanical force in a connected state to the first to third arms (41, 42, 53), respectively,
and
wherein each of the first to third arms (41, 42, 53) is provided with a pair of core holders (45, 46, 55) for fixing the pair of core members (81b, 82b, 83b) of the pair of first to third cables (81, 82, 83), wherein the pair of core holders (45, 46, 55) are installed on both side surfaces of each of the first to third arms (41, 42, 53).

2. The device of claim 1, further comprising first to third connection members (61, 62, 63) spaced from the first to third arms (41, 42, 53), and configured to fix the sheaths of the pair of first to third cables (81, 82, 83), respectively.

3. The device of one of claims 1 to 2, **characterized in that** the first and second connection members (61, 62) are located apart from each other in opposite directions, on the basis of the bi-directional lever (40).

4. The device of one of claims 2 to 3, **characterized in that** each of the first to third connection members (61, 62, 63) is provided with a pair of cable holes (61a, 62a, 63a) for fixing a pair of sheaths (81a, 82a, 83a) of each of the pair of first to third cables (81, 82, 83).

5. The device of claim 4, **characterized in that** core holes (45a, 46a, 55a) for inserting the core members (81b, 82b, 83b) are penetratingly-formed at the core holders (45, 46, 55), and core fixing holes (45b, 46b, 55b) are formed at one side of the core holes (45a, 46a, 55a) in a direction perpendicular to the core holes (45a, 46a, 55a).

6. The device of claim 4 or 5, **characterized in that** sheath fixing holes (61b, 62b, 63b) are penetratingly-formed at one side of the cable holes (61a, 62a, 63a), in a direction perpendicular to the cable holes (61a, 62a, 63a).

7. The device of claim 6, **characterized in that** coupling means (71, 72) are provided to fix the core members (81b, 82b, 83b) or the sheaths (81a, 82a, 83a) by being inserted into the core fixing holes (45b, 46b, 55b) or the sheath fixing holes (61b, 62b, 63b).

8. The device of one of claims 1 to 7, **characterized in that** a locking lever (47), rotated in a connected state to the shaft lever (25) of the circuit breaker body (20), is provided on a rear surface of the bi-directional lever (40),
**characterized in that** a transmission lever (57), rotated in a connected state to the off lever (26) of the circuit breaker body (20), is provided on a rear surface of the uni-directional lever (50), and
**characterized in that** first and second insertion holes (12, 13), configured to insert the locking lever (47) and the transmission lever (57), respectively, are formed at a side plate (11) of the cradle (10).

9. The device of claim 8, **characterized in that** a plurality of assembly holes (14) for insertion-installation of the mounting plate (30) are formed at the side plate (11), and mounting pins (31) inserted into the assembly holes (14) are provided on a rear surface of the mounting plate (30).

10. The device of one of claims 1 to 9, **characterized in that** the mounting plate (30) is provided with operation holes (32, 33) for operating the core holders (45, 46, 55) by inserting part of the core holders (45, 46, 55).

11. A method of using a first system and a second system according to any one of claims 1 to 10, the method comprising:
a step (S1) of connecting the first arm (A41) of a first circuit breaker (A) of the first system with the third arm (B53) of a second circuit breaker (B) of the second system by a first cable (81), connecting the second arm (A42) of the first circuit breaker (A) with a door lever (A92) of the first circuit breaker (A) by a second cable (82), connecting the third arm (A53) of the first circuit breaker (A) with the first arm (B41) of the second circuit breaker (B) by a third cable (83), connecting the second arm (A42) of the first circuit breaker (A) with a switch lever (A97) of a MOC switch (A96) of the first circuit breaker (A) by a fourth cable (84), connecting the third arm (A53) of the first circuit breaker (A) with an opening lever (A93) of the first circuit breaker (A) by a fifth cable (85), connecting the second arm (B42) of the second circuit breaker (B) with a door lever (B92) of the second circuit breaker (B) by a sixth cable (86), connecting the second arm (B42) of the second circuit breaker (B) with a switch lever (B97) of a MOC switch (B96) of the second circuit breaker (B) by a seventh cable (87), and connecting the third arm (B53) of the second circuit breaker (B) with an opening lever (B93) of the second circuit breaker (B) by an eighth cable (88); and
a step (S2) of turning on the second circuit breaker (B) to rotate the bi-directional lever (B40) of the second circuit breaker (B), pulling the third cable (83) by downward-moving the first arm (B41) of the second circuit breaker (B), and turning off the first circuit breaker (A) by downward-moving the third arm (A53) of the first circuit breaker (A).

12. The method of claim 11, further comprising a step (S3) of pulling the sixth cable (86) by upward-moving the second arm (B42) of the second circuit breaker (B), and preventing a switchboard door of the second circuit breaker (B) from being open by rotating the door lever (B92) of the second circuit breaker (B) and locking the door lever (B92) of the second circuit breaker (B) to a restriction plate (B94) of the second circuit breaker (B).

13. The method of claim 12, further comprising a step (S4) of pulling the seventh cable (87) by upward-moving the second arm (B42) of the second circuit breaker (B), and turning on the MOC switch (B96) of the second circuit breaker (B).

14. The method of claim 13, further comprising a step (S5) of rotating the opening lever (A93) of the first circuit breaker (A) by opening a switchboard door of the first circuit breaker (A), pulling the fifth cable (85) by the opening lever (A93) of the first circuit breaker (A), and turning off the first circuit breaker (A) by downward-moving the third arm (A53) of the first circuit breaker (A).

## Patentansprüche

1. System, umfassend einen Luftleistungsschalter und eine an einer Halterung (10) oder einer Schalttafel des Luftleistungsschalters installierte integrierte Verriegelungsvorrichtung zum Steuern einer Interaktion mit einem oder mehreren anderen Luftleistungsschaltern, wobei der Luftleistungsschalter und die integrierte Verriegelungsvorrichtung umfassen:
eine an einem Teil der Halterung (10) oder der Schalttafel installierte Montageplatte (30);
eine drehbar an der Montageplatte (30) installierte Hebelanordnung; und
mit der Hebelanordnung gekoppelte Kabel, wobei jedes Kabel (81, 82, 83) eine Ummantelung (81a, 82a, 83a) und ein Kernelement (81b, 82b, 83b) umfasst,
wobei die Hebelanordnung umfasst:
einen drehbar an der Montageplatte (30) installierten bidirektionalen Hebel (40), aufweisend einen ersten Arm (41) und einen zweiten Arm (42), die in unterschiedliche Richtungen weisen und auf einer ersten Drehwelle (43) vorgesehen sind, und der in einem verbundenen Zustand mit einem Wellenhebel (25) eines Leistungsschalterkörpers (20) bewegt wird; und
wobei die Hebelanordnung ferner umfasst:
einen drehbar an der Montageplatte (30) in einem von dem bidirektionalen Hebel (40) beabstandeten Zustand installierten unidirektionalen Hebel (50), aufweisend einen dritten Arm (53), der in eine Richtung basierend auf einer zweiten Drehwelle (51) gerichtet ist und in einem verbundenen Zustand mit einem Aus-Hebel (26) des Leistungsschalterkörpers (20) bewegt wird, wobei der Aus-Hebel (26) zum Erzeugen eines Unterbrechungsvorgangs zum Ausschalten des Luftleistungsschalters konfiguriert ist, und wobei die Kabel bis zu Paare von ersten bis dritten Kabeln (81, 82, 83) umfassen, die in einem verbundenen Zustand zum Übertragen einer mechanischen Kraft auf den ersten bzw. dritten Arm (41, 42, 53) konfiguriert sind,
und wobei jeder der ersten bis dritten Arme (41, 42, 53) mit einem Paar von Kernhaltern (45, 46, 55) zum Befestigen des Paars von Kernelementen (81b, 82b, 83b) des Paars von ersten bis dritten Kabeln (81, 82, 83) vorgesehen ist, wobei das Paar von Kernhaltern (45, 46, 55) an beiden Seitenflächen von jedem der ersten bis dritten Arme (41, 42, 53) installiert ist.

2. Vorrichtung nach Anspruch 1, ferner umfassend erste bis dritte Verbindungselemente (61, 62, 63), die von den ersten bis dritten Armen (41, 42, 53) beabstandet und konfiguriert sind, um die Ummantelungen des Paars von ersten bis dritten Kabeln (81, 82, 83) jeweils zu befestigen.

3. Vorrichtung nach einem der Ansprüche 1 bis 2, **dadurch gekennzeichnet, dass** das erste und das zweite Verbindungselement (61, 62) basierend auf dem bidirektionalen Hebel (40) in entgegengesetzten Richtungen voneinander beabstandet sind.

4. Vorrichtung nach einem der Ansprüche 2 bis 3, **dadurch gekennzeichnet, dass** jedes der ersten bis dritten Verbindungselemente (61, 62, 63) mit einem Paar von Kabellöchern (61a, 62a, 63a) zum Befestigen eines Paars von Ummantelungen (81a, 82a, 83a) jedes des Paars der ersten bis dritten Kabel (81, 82, 83) vorgesehen ist.

5. Vorrichtung nach Anspruch 4, **dadurch gekennzeichnet, dass** Kernlöcher (45a, 46a, 55a) zum Einsetzen der Kernelemente (81b, 82b, 83b) an den Kernhaltern (45, 46, 55) durchdringend ausgebildet sind und Kernbefestigungslöcher (45b, 46b, 55b) an einer Seite der Kernlöcher (45a, 46a, 55a) in einer Richtung senkrecht zu den Kernlöchern (45a, 46a, 55a) ausgebildet sind.

6. Vorrichtung nach Anspruch 4 oder 5, **dadurch gekennzeichnet, dass** Ummantelungsbefestigungslöcher (61b, 62b, 63b) an einer Seite der Kabellöcher (61a, 62a, 63a) in einer Richtung senkrecht zu den Kabellöchern (61a, 62a, 63a) durchdringend ausgebildet sind.

7. Vorrichtung nach Anspruch 6, **dadurch gekennzeichnet, dass** Kopplungsmittel (71, 72) zum Befestigen der Kernelemente (81b, 82b, 83b) oder der Ummantelungen (81a, 82a, 83a) durch Einsetzen in die Kernbefestigungslöcher (45b, 46b, 55b) oder die Ummantelungsbefestigungslöcher (61b, 62b, 63b) vorgesehen sind.

8. Vorrichtung nach einem der Ansprüche 1 bis 7, **dadurch gekennzeichnet, dass** an einer hinteren Fläche des bidirektionalen Hebels (40) ein Verriegelungshebel (47) vorgesehen ist, der in einem mit dem Wellenhebel (25) des Leistungsschalterkörpers (20) verbundenen Zustand gedreht wird,
**dadurch gekennzeichnet, dass** ein Übertragungshebel (57), der in einem mit dem Aus-Hebel (26) des Leistungsschalterkörpers (20) verbundenen Zustand gedreht wird, an einer hinteren Fläche des unidirektionalen Hebels (50) vorgesehen ist, und
**dadurch gekennzeichnet, dass** erste und zweite Einsetzlöcher (12, 13), die zum Einsetzen des Verriegelungshebels (47) bzw. des Übertragungshebels (57) konfiguriert sind, an einer Seitenplatte (11) der Halterung (10) ausgebildet sind.

9. Vorrichtung nach Anspruch 8, **dadurch gekennzeichnet, dass** an der Seitenplatte (11) eine Vielzahl von Montagelöchern (14) für die Einsetz-Installation der Montageplatte (30) ausgebildet sind und an einer hinteren Fläche der Montageplatte (30) in die Montagelöcher (14) eingesetzte Montagestifte (31) vorgesehen sind.

10. Vorrichtung nach einem der Ansprüche 1 bis 9, **dadurch gekennzeichnet, dass** die Montageplatte (30) mit Betätigungslöchern (32, 33) zum Betätigen der Kernhalter (45, 46, 55) durch Einsetzen eines Teils der Kernhalter (45, 46, 55) vorgesehen ist.

11. Verfahren zum Verwenden eines ersten Systems und eines zweiten Systems nach einem der Ansprüche 1 bis 10, das Verfahren umfassend:
einen Schritt (S1) des Verbindens des ersten Arms (A41) eines ersten Leistungsschalters (A) des ersten Systems mit dem dritten Arm (B53) eines zweiten Leistungsschalters (B) des zweiten Systems durch ein erstes Kabel (81), Verbinden des zweiten Arms (A42) des ersten Leistungsschalters (A) mit einem Türhebel (A92) des ersten Leistungsschalters (A) durch ein zweites Kabel (82), Verbinden des dritten Arms (A53) des ersten Leistungsschalters (A) mit dem ersten Arm (B41) des zweiten Leistungsschalters (B) durch ein drittes Kabel (83), Verbinden des zweiten Arms (A42) des ersten Leistungsschalters (A) mit einem Schalthebel (A97) eines MOC-Schalters (A96) des ersten Leistungsschalters (A) durch ein viertes Kabel (84), Verbinden des dritten Arms (A53) des ersten Leistungsschalters (A) mit einem Öffnungshebel (A93) des ersten Leistungsschalters (A) durch ein fünftes Kabel (85), Verbinden des zweiten Arms (B42) des zweiten Leistungsschalters (B) mit einem Türhebel (B92) des zweiten Leistungsschalters (B) durch ein sechstes Kabel (86), Verbinden des zweiten Arms (B42) des zweiten Leistungsschalters (B) mit einem Schalthebel (B97) eines MOC-Schalters (B96) des zweiten Leistungsschalters (B) durch ein siebtes Kabel und Verbinden des dritten Arms (B53) des zweiten Leistungsschalters (B) mit einem Öffnungshebel (B93) des zweiten Leistungsschalters (B) durch ein achtes Kabel (88); und
einen Schritt (S2) des Einschaltens des zweiten Leistungsschalters (B) zum Drehen des bidirektionalen Hebels (B40) des zweiten Leistungsschalters (B), des Ziehens des dritten Kabels (83) durch Abwärtsbewegen des ersten Arms (B41) des zweiten Leistungsschalters (B) und des Ausschaltens des ersten Leistungsschalters (A) durch Abwärtsbewegen des dritten Arms (A53) des ersten Leistungsschalters (A).

12. Verfahren nach Anspruch 11, ferner umfassend einen Schritt (S3) des Ziehens des sechsten Kabels (86) durch Aufwärtsbewegen des zweiten Arms (B42) des zweiten Leistungsschalters (B) und Verhindern des Öffnens einer Schaltschranktür des zweiten Leistungsschalters (B) durch Drehen des Türhebels (B92) des zweiten Leistungsschalters (B) und Verriegeln des Türhebels (B92) des zweiten Leistungsschalters (B) an einer Begrenzungsplatte (B94) des zweiten Leistungsschalters (B).

13. Verfahren nach Anspruch 12, ferner umfassend einen Schritt (S4) des Ziehens des siebten Kabels (87) durch Aufwärtsbewegen des zweiten Arms (B42) des zweiten Leistungsschalters (B) und Einschalten des MOC-Schalters (B96) des zweiten Leistungsschalters (B).

14. Verfahren nach Anspruch 13, ferner umfassend einen Schritt (S5) des Drehens des Öffnungshebels (A93) des ersten Leistungsschalters (A) durch Öffnen einer Schaltschranktür des ersten Leistungsschalters (A), Ziehen des fünften Kabels (85) durch den Öffnungshebel (A93) des ersten Leistungsschalters (A) und Ausschalten des ersten Leistungsschalters (A) durch Abwärtsbewegen des dritten Arms (A53) des ersten Leistungsschalters (A).

## Revendications

1. Système comprenant un disjoncteur dans l'air et un dispositif de verrouillage intégré installé au niveau d'un berceau (10) ou d'un tableau de distribution du disjoncteur dans l'air pour commander une interaction avec un ou plusieurs autres disjoncteurs dans l'air, le disjoncteur dans l'air et le dispositif de verrouillage intégré comprenant :
une plaque de montage (30) installée au niveau d'une partie du berceau (10) ou du tableau de distribution ;
un ensemble levier installé en rotation au niveau de la plaque de montage (30) ; et
des câbles couplés à l'ensemble levier, chaque câble (81, 82, 83) comportant une gaine (81a, 82a, 83a) et un élément d'âme (81b, 82b, 83b),
dans lequel l'ensemble levier comporte :
un levier bidirectionnel (40) installé en rotation au niveau de la plaque de montage (30), ayant un premier bras (41) et un deuxième bras (42) qui vont vers des directions différentes et prévus sur un premier arbre de rotation (43), et déplacé dans un état connecté jusqu'à un levier d'arbre (25) d'un corps de disjoncteur (20) ; et
dans lequel l'ensemble levier comporte en outre :
un levier unidirectionnel (50) installé en rotation au niveau de la plaque de montage (30) dans un état espacé du levier bidirectionnel (40), ayant un troisième bras (53) qui va vers une direction sur la base d'un deuxième arbre de rotation (51), et déplacé dans un état connecté jusqu'à un levier d'arrêt (26) du corps de disjoncteur (20), dans lequel le levier d'arrêt (26) est configuré pour générer une opération d'interruption pour désactiver le disjoncteur dans l'air, et
dans lequel les câbles comportent jusqu'à des paires de premier à troisième câbles (81, 82, 83) configurées pour transmettre une force mécanique dans un état connecté aux premier à troisième bras (41, 42, 53), respectivement,
et dans lequel chacun des premier à troisième bras (41, 42, 53) est pourvu d'une paire de supports d'âme (45, 46, 55) pour fixer la paire d'éléments d'âme (81b, 82b, 83b) de la paire de premier à troisième câbles (81, 82, 83), dans lequel la paire de supports d'âme (45, 46, 55) sont installés sur les deux surfaces latérales de chacun des premier à troisième bras (41, 42, 53).

2. Dispositif selon la revendication 1, comprenant en outre des premier à troisième éléments de connexion (61, 62, 63) espacés des premier à troisième bras (41, 42, 53), et configurés pour fixer les gaines de la paire de premier à troisième câbles (81, 82, 83), respectivement.

3. Dispositif selon l'une des revendications 1 et 2, **caractérisé en ce que** les premier et deuxième éléments de connexion (61, 62) sont situés séparés l'un de l'autre dans des directions opposées, sur la base du levier bidirectionnel (40).

4. Dispositif selon l'une des revendications 2 et 3, **caractérisé en ce que** chacun des premier à troisième éléments de connexion (61, 62, 63) est pourvu d'une paire de trous de câble (61a, 62a, 63a) pour fixer une paire de gaines (81a, 82a, 83a) de chacun de la paire de premier à troisième câbles (81, 82, 83) .

5. Dispositif selon la revendication 4, **caractérisé en ce que** des trous d'âme (45a, 46a, 55a) pour l'insertion des éléments d'âme (81b, 82b, 83b) sont formés de manière pénétrante au niveau des supports d'âme (45, 46, 55), et des trous de fixation d'âme (45b, 46b, 55b) sont formés au niveau d'un côté des trous d'âme (45a, 46a, 55a) dans une direction perpendiculaire aux trous d'âme (45a, 46a, 55a).

6. Dispositif selon la revendication 4 ou 5, **caractérisé en ce que** des trous de fixation de gaine (61b, 62b, 63b) sont formés de manière pénétrante au niveau d'un côté des trous de câble (61a, 62a, 63a), dans une direction perpendiculaire aux trous de câble (61a, 62a, 63a).

7. Dispositif selon la revendication 6, **caractérisé en ce que** des moyens de couplage (71, 72) sont prévus pour la fixation des éléments d'âme (81b, 82b, 83b) ou des gaines (81a, 82a, 83a) en étant insérés dans les trous de fixation d'âme (45b, 46b, 55b) ou les trous de fixation de gaine (61b, 62b, 63b).

8. Dispositif selon l'une des revendications 1 à 7, **caractérisé en ce qu'**un levier de blocage (47), tourné dans un état connecté au levier d'arbre (25) du corps de disjoncteur (20), est prévu sur une surface arrière du levier bidirectionnel (40),
**caractérisé en ce qu'**un levier de transmission (57), tourné dans un état connecté au levier d'arrêt (26) du corps de disjoncteur (20), est prévu sur une surface arrière du levier unidirectionnel (50), et
**caractérisé en ce que** des premier et deuxième trous d'insertion (12, 13), configurés pour insérer le levier de blocage (47) et le levier de transmission (57), respectivement, sont formés au niveau d'une plaque latérale (11) du berceau (10).

9. Dispositif selon la revendication 8, **caractérisé en ce qu'**une pluralité de trous d'assemblage (14) pour une insertion-installation de la plaque de montage (30) sont formés au niveau de la plaque latérale (11), et des broches de montage (31) insérées dans les trous d'assemblage (14) sont prévues sur une surface arrière de la plaque de montage (30).

10. Dispositif selon l'une des revendications 1 à 9, **caractérisé en ce que** la plaque de montage (30) est pourvue de trous d'actionnement (32, 33) destinés à actionner les supports d'âme (45, 46, 55) par insertion d'une partie des supports d'âme (45, 46, 55).

11. Procédé d'utilisation d'un premier système et d'un deuxième système selon l'une quelconque des revendications 1 à 10, le procédé comprenant :
une étape (S1) consistant à connecter le premier bras (A41) d'un premier disjoncteur (A) du premier système au troisième bras (B53) d'un deuxième disjoncteur (B) du deuxième système par un premier câble (81), connecter le deuxième bras (A42) du premier disjoncteur (A) à un levier de trappe (A92) du premier disjoncteur (A) par un deuxième câble (82), connecter le troisième bras (A53) du premier disjoncteur (A) au premier bras (B41) du deuxième disjoncteur (B) par un troisième câble (83), connecter le deuxième bras (A42) du premier disjoncteur (A) à un levier de commutateur (A97) d'un commutateur MOC (A96) du premier disjoncteur (A) par un quatrième câble (84), connecter le troisième bras (A53) du premier disjoncteur (A) à un levier d'ouverture (A93) du premier disjoncteur (A) par un cinquième câble (85), connecter le deuxième bras (B42) du deuxième disjoncteur (B) à un levier de trappe (92) du deuxième disjoncteur (B) par un sixième câble (86), connecter le deuxième bras (B42) du deuxième disjoncteur (B) à un levier de commutateur (B97) d'un commutateur MOC (B96) du deuxième disjoncteur (B) par un septième câble et connecter le troisième bras (B53) du deuxième disjoncteur (B) à un levier d'ouverture (B93) du deuxième disjoncteur (B) par un huitième câble (88) ; et
une étape (S2) consistant à activer le deuxième disjoncteur (B) pour faire tourner le levier bidirectionnel (B40) du deuxième disjoncteur (B), tirer le troisième câble (83) par déplacement vers le bas du premier bras (B41) du deuxième disjoncteur (B), et désactiver le premier disjoncteur (A) par déplacement vers le bas du troisième bras (A53) du premier disjoncteur (A).

12. Procédé selon la revendication 11, comprenant en outre une étape (S3) consistant à tirer le sixième câble (86) par déplacement vers le haut du deuxième bras (B42) du deuxième disjoncteur (B), et empêcher une trappe de tableau de distribution du deuxième disjoncteur (B) d'être ouverte par rotation du levier de trappe (B92) du deuxième disjoncteur (B) et verrouillage du levier de trappe (B92) du deuxième disjoncteur (B) jusqu'à une plaque de limitation (B94) du deuxième disjoncteur (B).

13. Procédé selon la revendication 12, comprenant en outre une étape (S4) consistant à tirer le septième câble (87) par déplacement vers haut du deuxième bras (B42) du deuxième disjoncteur (B), et activer le commutateur MOC (B96) du deuxième disjoncteur (B).

14. Procédé selon la revendication 13, comprenant en outre une étape (S5) consistant à faire tourner le levier d'ouverture (A93) du premier disjoncteur (A) par ouverture d'une trappe de tableau de distribution du premier disjoncteur (A), tirer le cinquième câble (85) par le levier d'ouverture (A93) du premier disjoncteur (A), et désactiver le premier disjoncteur (A) par déplacement vers le bas du troisième bras (A53) du premier disjoncteur (A).
